# EUROPÄISCHE PATENTANMELDUNG

(11) **EP 1 344 994 A2**
(43) Veröffentlichungstag der Anmeldung: **17.09.2003**
(21) Anmeldenummer: 03004110.7
(22) Anmeldetag: 26.02.2003
(51) Int. Cl.: F24H 1/43, F24H 9/12

(54) **Kompaktheizkessel**

(30) Priorität: 15.03.2002 DE 10211489
(71) Anmelder: Viessmann Werke GmbH & Co KG, 35107 Allendorf (DE)
(72) Erfinder: Görge, Gunthard, 35260 Stadtallendorf (DE); Schleiter, Wolfgang, 35119 Rosenthal (DE); Vogt, Arno, 35099 Wiesenfeld (DE)
(74) Vertreter: Wolf, Günter, Dipl.-Ing.

(57) **Zusammenfassung**

Die Erfindung betrifft einen Kompaktheizkessel, insbesondere zur Verwendung als Brennwertheizkessel, bestehend aus mindestens zwei in einem das wärmeabgebende Medium führenden, mit Brenner bestückbaren Gehäuse (1) angeordneten, den Wärmeträger vom Rücklauf (RL) zum Vorlauf (VL) führenden Rohrwendeln (2), die mit ihren Gängen ineinander verschraubt und damit zueinander parallel verlaufend erstreckt sind, wobei deren die Wendelgänge (3) bildende Rohre (4) einen Spalt (5) für das radial von innen aus den Rohrwendeln nach außen in das mit Abzugsstutzen (6) versehene Gehäuse (1) strömenden Heizgase begrenzen.

Nach der Erfindung sind die Rück- und Vorläufe (RL,VL) in Form von die Gehäusevorder- und Rückwand (1',1") im wesentlichen bildenden, wasserführenden Platinen (7,8 ) ausgebildet, von denen die eine den Vorlaufanschluß (9) und die andere den Rücklaufanschluß (10) aufweist, wobei die Rohrwendeln (2) mit ihren steigungsentsprechend angeschnittenen Enden an die beiden Platinen (7,8) wasserführend angeschlossen sind.

## Beschreibung

Die Erfindung betrifft einen Kompaktheizkessel, insbesondere zur Verwendung als Brennwertheizkessel, bestehend aus mindestens zwei in einem das wärmeabgebende Medium führenden, mit Brenner bestückbaren Gehäuse angeordneten, den Wärmeträger vom Rücklauf zum Vorlauf führenden Rohrwendeln, die mit Ihren Gängen ineinander verschraubt und damit zueinander parallel erstreckt sind, wobei die die Wendelgänge bildende Rohre einen Spalt für das radial von innen aus den Rohrwendeln nach außen in das mit Abzugsstutzen versehene Gehäuse strömenden Heizgase begrenzen.

Ein Kompaktheizkessel dieser Art ist bspw. bekannt nach der FR-A-2 700 608, die neben einer Vielzahl von Verschaltungsmöglichkeiten der Rohrwendeln auch die einleitend erwähnte enthält, bei der zwei identische Rohrwendeln bei jeweils entsprechendem Gangabstand ineinander "verschraubt" angeordnet sind. Die die Enden der Rohrwendeln bildenden Vor- und Rücklaufanschlüsse jeder Wendel laufen dabei tangential aus den Wendeln heraus und müssen den die Heizgase führenden Raum des Außengehäuses durchgreifen und auch die Wand des Gehäuses, d.h., bei der Anordnung von mindestens zwei Rohrwendeln ergeben sich vier Durchgriffsstellen, die eine aufwendige, gasdichte Verbindung zwischen den Vor- und Rücklaufanschlüssen und der Gehäusewand verlangen.
An einem ähnlichen Kompaktheizkessel nach der DE-A-199 12 572 sind zwecks Leistungs- und Volumenstromerhöhung bei einer besonderen Ausführungsform ebenfalls zwei Rohrwendeln im gasführenden Umschließungsgehäuse eingebaut, die jedoch nicht im oben definierten Sinne ineinander verschraubt, sondern in Bezug auf einen zwischen diesen angeordneten, von einer ringförmigen Platine gebildeten Vorlaufhohlraum axial nebeneinander angeordnet sind, der mit einem Vorlaufanschluß versehen ist. Die Rücklaufanschlüsse für beide Rohrwendeln befinden sich an den beiden ebenfalls platinenartig ausgebildeten Flankenwänden des Gehäuses. Bei dieser speziellen Ausführungsform des Kessels nach der DE-A-199 12 572 sind zwar Durchgriffe der Rückläufe durch den heizgasführenden Raum vermieden, was jedoch nicht für den Vorlaufanschluß an der mittleren Platine gilt, deren Ausbildung und Anordnung selbst einen beträchtlichen Aufwand darstellt und die, da sie mittig die von den beiden Rohrwendeln definierte Brennkammer umfaßt, mit ihren Schweißnähten voll der Brennerbelastung ausgesetzt ist und ein Ausfallrisiko darstellen kann.

Ausgehend von diesem Stand der Technik liegt der Erfindung die Aufgabe zugrunde, die dargelegten Nachteile zu vermeiden, d.h., unter Vermeidung einer aufwendig herzustellenden, einzubindenden und hoch belasteten Mittelplatine und unter Beibehaltung des Prinzips mindestens zweier ineinander verschraubter Rohrwendeln dafür zu sorgen, daß trotzdem Durchgriffe des heizgasführenden, sich um die Rohrwendeln herum im Gehäuse erstreckenden Raumes entfallen.
Diese Aufgabe ist mit einem Kompaktheizkessel der eingangs genannten Art nach der Erfindung dadurch gelöst, daß die Rückund Vorläufe in Form von die Gehäusevorder- und -rückwand im wesentlichen bildenden, wasserführenden Platinen ausgebildet sind, von denen die eine den Vorlaufanschluß und die andere den Rücklaufanschluß aufweist, wobei die Rohrwendeln mit ihren steigungsentsprechend angeschnittenen Enden an die beiden Platinen wasserführend angeschlossen sind.

Vorteilhafte Weiterbidlungen ergeben sich nach den Unteransprüchen.
Was dabei die Formulierung "im wesentlichen die Gehäusevorderund -rückwand bildende Platinen" betrifft, so nimmt dies Rücksicht darauf, daß die Vorderwandplatine selbstverständlich eine entsprechende Brennereinsatzöffnung aufweist und beide Platinen nicht wasserführende Umfangsbereiche aufweisen, mit denen sie gasdicht mit der Umfangswand des Gehäuses verbindbar sind.

Im Gegensatz zum Heizkessel nach der FR-A-2 700 608 fallen hier einerseits nachteilige Mehrfachdurchgriffe durch den die abströmenden Heizgase führenden Raum und die Wand des Umschließungsgehäuses weg, und im Gegensatz zum Heizkessel nach der genannten DE-A-199 12 572 entfällt andererseits die den Vorlaufsammler bildende, aufwendige Mittelplatine, die sonst immer noch den Durchgriff des eigentlichen Vorlaufanschlusses durch den heizgasführenden Raum des Gehäuses verlangt, wobei außerdem zu berücksichtigen ist, daß die die Flankenwände dieses Kessels bildenden Platinen nach der genannten DE-A-199 12 572 ausschließlich Rücklaufplatinen darstellen, die jeweils für sich einen Rücklaufanschluß erfordern, was letztlich auch für den Kessel nach der genannten FR-A-2 700 608 gilt, d.h., wenn man dort nur einen Rücklauf und Vorlaufanschlußstutzen haben wollte, müßten außerhalb des Gehäuses die jeweiligen Enden, egal ob Vor- oder Rückläufe, der Rohrwendeln durch Sammelleitungen verbunden werden, wie dies dort auch verwirklicht ist.

Der erfindungsgemäße Kompaktheizkessel und seine vorteilhaften Weiterbildungen und Ausführungsformen werden nachfolgend anhand der zeichnerischen Darstellung von Ausführungsbeispielen näher erläutert.
Es zeigt
- Fig.1: einen Schnitt durch den Kompaktheizkessel längs Linie I-I in Fig.2;
- Fig.1A: schematisch den Zuschnitt und Anschluß der Enden der Wendelrohre an die Platinen;
- Fig.2: eine Vorderansicht des Kessels gemäß Fig.1;
- Fig.3: schematisch und perspektivisch das Kesselgehäuse von der brennerseite her gesehen, und zwar bei geöffneter Vorderwandplatine;
- Fig.4: eine der Fig.3 entsprechende Darstellung bei ge öffneter Rückwandplatine;
- Fig.4A: schematisch eine zur Fig.4 etwas andere innere Ausge staltung der Rückwandplatine;
- Fig.5: im Schnitt eine besondere Ausführungsform der Rohrwendeln und
- Fig.6: perspektivische Einzeldarstellungen der beiden RohrWendeln gemäß Fig.5.

Der näher zu erläuternde Kompaktheizkessel besteht nach wie vor aus mindestens zwei in einem das wärmeabgebende Medium führenden, mit Brenner bestückbaren und mit einem Kondensatablaufanschluß 16 versehenen Gehäuse 1 angeordneten, den Wärmeträger vom Rücklauf zum Vorlauf führenden Rohrwendeln 2, die mit ihren Gängen ineinander verschraubt und damit zueinander parallel verlaufend erstreckt sind, wobei deren die Wendelgänge 3 bildende Rohre 4 einen Spalt 5 für das radial von innen aus den Rohrwendeln nach außen in das mit Abzugsstutzen 6 versehene Gehäuse 1 strömenden Heizgase begrenzen.

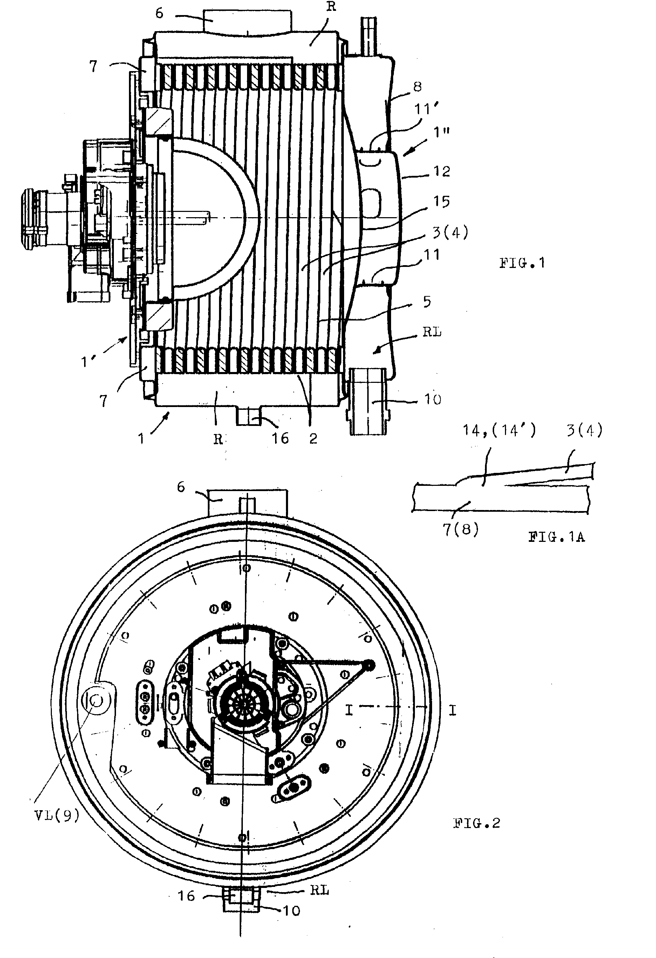

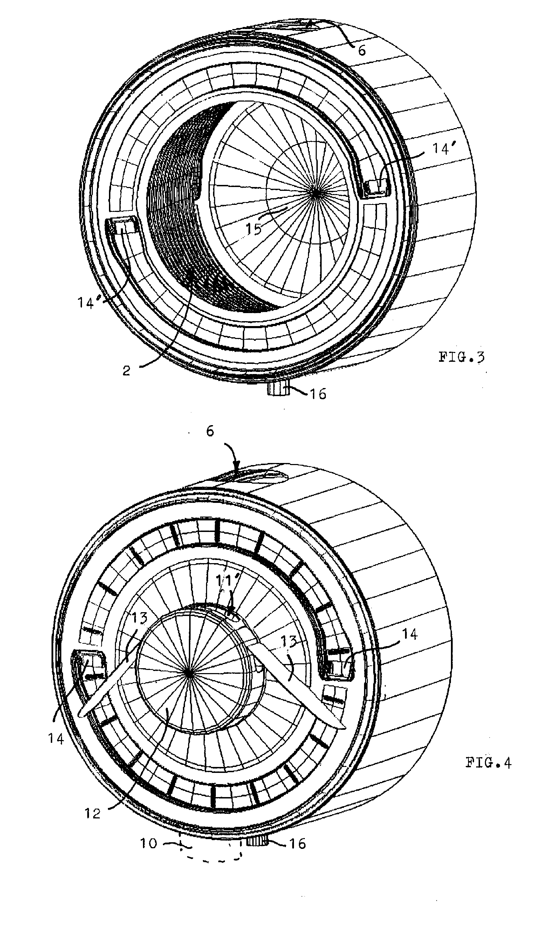

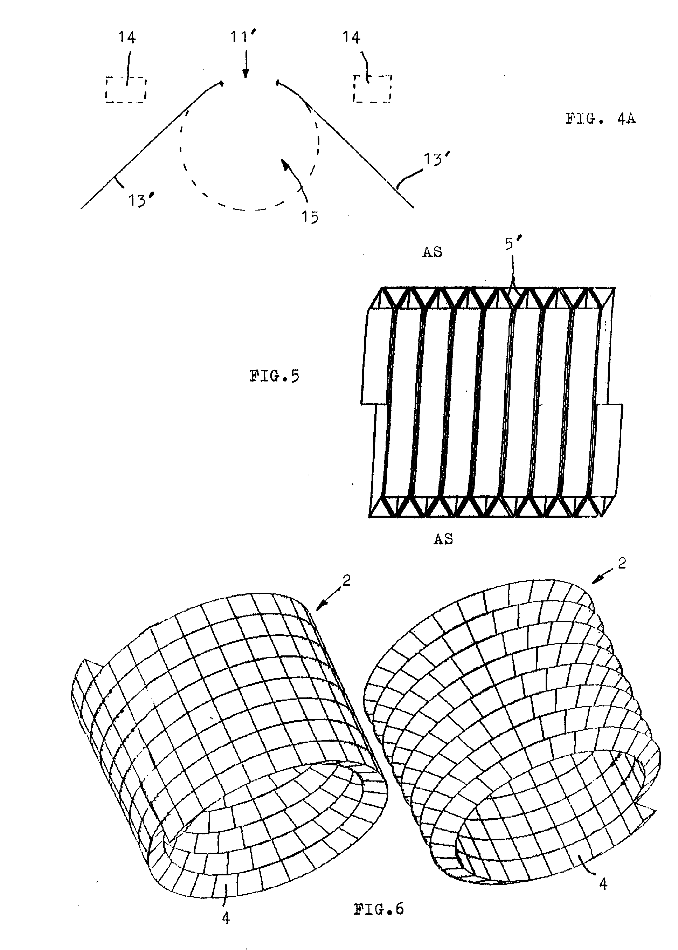

Für einen derartigen Kompaktheizkessel ist nunmehr wesentlich, daß die Rück- und Vorläufe RL,VL in Form von die Gehäusevorderund Rückwand 1',1" im wesentlichen bildenden, wasserführenden Platinen 7,8 ausgebildet sind, von denen die eine den Vorlaufanschluß 9 und die andere den Rücklaufanschluß 10 aufweist, wobei die Rohrwendeln 2 mit ihren steigungsentsprechend angeschnittenen Enden an die beiden Platinen 7,8 wasserführend angeschlossen sind.
Bzgl. der "steigungsentsprechend angeschnittenen Enden" der Rohre 4 wird auf Fig.1 verwiesen, womit dafür gesorgt ist, daß sich ein minimal raumbeanspruchender Anschluß an die Platinen 7,8 ergibt.
Trotz der Anordnung mindestens zweier Rohrwendeln 2 kommt der Kompaktheizkessel mit nur einem Rücklaufanschluß 10 an der die Rückwand 1" bildenden Platine 8 und einem Vorlaufanschluß 9 an der brennerseitig befindlichen Platine 7 (siehe Fig.2) aus, und zwar ohne daß dabei der eine und/oder andere Anschluß den die Heizgase führenden Raum R durchgreifen muß. Dargestellt sind in Fig.1 nur zwei ineinander "verschraubte" Rohrwendeln 2, von denen die eine zur besseren Verdeutlichung schraffiert ist.
Bei zwei Rohrwendeln 2 sind deren Rücklaufanschlußöffnungen 14 und deren Vorlaufanschlußöffnungen 14' unter Verweis auf die Fig.3,4 diametral gegenüberliegend und bei erforderlicher weitergehender Volumenstromaufteilung möglichen Anordnung von mehr als zwei Rohrwendeln 2 entsprechend gleichmäßig auf einen Kreis verteilt angeordnet.

Mit Rücksicht auf die Belastung der Rückwand 1" des Gehäuses 1 durch den Brenner B ist diese durch die den Rücklauf RL bildende Platine 8 gebildet, wobei in der die Rückwand 1" bildenden Platine 8 eine mittige, zylindrische, mit einer unteren Ein-und einer oberen Auslaßöffnungen 11,11' versehene Strömungsführung 12 angeordnet ist, an der tangential Strömungsleitbleche 13 angesetzt sind, die den direkten Strömungsweg vom Rücklaufanschluß 10 zu den Rücklaufanschlußöffnungen 14 der Rohrwendeln 2 zumindest weitgehend unterbinden. Damit wird da
für gesorgt, daß insbesondere dem hoch belasteten mittigen Innenwandbereich 15 der Platine 8 das relativ kalte Rücklaufwasser direkt zugeführt werden kann, das sonst den direkten Weg zu den Rücklaufanschlußöffnungen 14 in der Platine 8 nehmen würde. Statt einer derartigen gewissermaßen topfartigen Strömungsführung 12 mit den tangential angesetzten Leitblechen 13, wie in Fig.4 dargestellt, kann dies aber auch durch ein einziges, im Sinne der Fig.4A gebogenes Leitblech 13' mit einer Durchströmöffnung 11' im Biegungsmaximum erreicht werden, wobei aber die topfartige Ausführungsform gemäß Fig.1 und 4 bevorzugt wird, da sich in dieser topfförmigen Strömungsführung 12 eine größere Verweilzeit bzw. Verteilung des durchströmenden Rücklaufes ergibt.

Eine besondere raumsparende und die Durchströmspalte 5' verlängernde Ausführungsform der die Wendeln 2 bildenden Rohre 4 ist in den Fig.5,6 verdeutlicht, wonach die die Wendeln 2 bildenden Rohre 4 im Querschnitt dreieck- oder angenähert dreieckförmig ausgebildet und derart ineinandergefügt sind, daß sich die von diesen begrenzten Durchströmspalte 5' v-förmig zur Abströmseite AS der Wendeln 2 erstrecken.

## Patentansprüche

1. Kompaktheizkessel, insbesondere zur Verwendung als Brennwertheizkessel, bestehend aus mindestens zwei in einem das wärmeabgebende Medium führenden, mit Brenner bestückbaren Gehäuse (1) angeordneten, den Wärmeträger vom Rücklauf (RL) zum Vorlauf (VL) führenden Rohrwendeln (2), die mit ihren Gängen ineinander verschraubt und damit zueinander parallel verlaufend erstreckt sind, wobei deren die Wendelgänge (3) bildende Rohre (4) einen Spalt (5) für das radial von innen aus den Rohrwendeln nach außen in das mit Abzugsstutzen (6) versehene Gehäuse (1) strömenden Heizgase begrenzen,
**dadurch gekennzeichnet,**
**daß** die Rück- und Vorläufe (RL,VL) in Form von die Gehäusevorder- und Rückwand (1',1") im wesentlichen bildenden, wasserführenden Platinen (7,8 ) ausgebildet sind, von denen die eine den Vorlaufanschluß (9) und die andere den Rücklaufanschluß (10) aufweist, wobei die Rohrwendeln (2) mit ihren steigungsentsprechend angeschnittenen Enden an die beiden Platinen (7,8) wasserführend angeschlossen sind.

2. Heizkessel nach Anspruch 1,
**dadurch gekennzeichnet,**
**daß** die den Rücklauf (RL) bildende Platine (8) mit ihrem Rücklaufanschluß (10) die Rückwand (1") des Gehäuses (1) bildet.

3. Heizkessel nach Anspruch 2,
**dadurch gekennzeichnet,**
**daß** in der die Rückwand (1") bildenden Platine (8) eine mittige, zylindrische, mit einer unteren Ein -und einer oberen Auslaßöffnung (11,11') versehene Strömungsführung (12) angeordnet ist, an der tangential Strömungsleitbleche (13) angesetzt sind, die den direkten Strömungsweg vom Rücklaufanschluß (10) zu den Rücklaufanschlußöffnungen (14) der Rohrwendeln (2) zumindest behindern.

4. Heizkessel nach einem der Ansprüche 1 bis 3,
**dadurch gekennzeichnet,**
**daß** die die Wendeln (2) bildenden Rohre im Querschnitt dreieckoder angenähert dreieckförmig ausgebildet und derart ineinandergefügt sind, daß sich die von diesen begrenzten Durchströmspalte (5') v-förmig zur Abströmseite (AS) der Wendeln (2) erstrecken.
